# EUROPEAN PATENT SPECIFICATION

(11) **EP 3 785 580 B1**
(45) Date of publication and mention of the grant of the patent: **15.12.2021**
(21) Application number: 20189004.3
(22) Date of filing: 31.07.2020
(51) Int. Cl.: A47J 36/00, A47J 36/06, A47J 36/10, A47J 27/13

(54) **A LOCK DEVICE FOR KITCHEN VESSELS**
VERRIEGELUNGSVORRICHTUNG FÜR KÜCHENTÖPFE
DISPOSITIF DE VERROUILLAGE POUR RÉCIPIENTS DE CUISINE

(30) Priority: 29.08.2019 IT 201900015198
(43) Date of publication of application: 03.03.2021
(73) Proprietor: Brunner S.r.l., 39100 Bolzano (IT)
(72) Inventor: BRUNNER, Roland, 39100 Bolzano BZ (IT)
(74) Representative: Perani & Partners S.p.A.

(56) References cited:
- EP-A2- 2 006 211
- EP-A2- 2 037 780
- US-A- 5 377 859
- US-A1- 2013 098 920
- US-A1- 2014 305 947

## Description

The present invention relates to a lock device for kitchen vessels. In particular, the lock device of the invention is of the type adapted to lock a first vessel inside a second vessel. This device is useful during transport of kitchen vessels, e.g. pots and pans, namely in the context of camping vehicles such as motor caravans or camping trailers or in recreational navigation.

Dishware, pottery and pans specifically designed for use in camping or other types of vehicles such as boats are well known in the art. Besides having the functions and characteristics of kitchen vessels for domestic use, these vessels use features that minimize their space requirements when not in use, for more convenient transportation. For example, certain pots have folding handles, allowing them to be nested one in the other. Usually, these pots are secured by fastening them with a string that is passed through the handles of the larger pot and is tied to the lid. Alternatively, an elongated handle (for example of a pan) may be folded over a lid and secured by a retainer to immobilize both elements.

One additional drawback is that in all prior solutions the vessels can never be completely secured. This causes the vessels to rub against one another during the movement of the vehicle, whether it be a boat or a caravan. This will result in undesired rattling noise. Moreover, if the vessels have a non-stick coating, the latter will be damaged and the useful life of these frequently transported vessels decreases.

A lock device adapted to lock a first vessel inside a second vessel is known from US-A-2013/0098920.

### SUMMARY OF THE INVENTION

Therefore, the technical purpose of the present invention is to provide a lock device for kitchen vessels, that can obviate the above mentioned prior art drawbacks.

In particular, it is an object of the present invention to provide a lock device for kitchen vessels that can prevent even the slightest movement between vessels.

The aforementioned technical purpose and objects are substantially fulfilled by a lock device for kitchen vessels that comprises the technical features as disclosed in one or more of the accompanying claims.

In particular, the lock device for kitchen vessels of the present invention is of the type adapted to lock a first vessel inside a second vessel. This device comprises a lid, which has a center axis. The lid has at least an inner edge with a diameter substantially corresponding to an inside diameter of the first vessel. The lid also has an outer edge with a diameter substantially corresponding to an outside diameter of the second vessel.

The lock device comprises a check valve located on the lid and designed to allow the outflow of air from the interior of the vessels.

The device further comprises a sealing ring made of an elastically deformable material. This sealing ring is placed at least on the outer edge of the lid, to allow the lid to fit into the second vessel and provide airtightness between the sealing ring and an inner wall of the second vessel.

This device solves the technical problem in that the elastic deformability causes the sealing ring to be pressed on the wall and prevents the passage of air. The check valve allows air extraction by simply pushing the lid toward the bottom of the vessels until the lid contacts the first vessel. Then, the pressure difference between the interior of the vessels and the outside locks the lid on the first vessel and accordingly locks the first vessel inside the second vessel, with no possible mutual displacement or sliding movement. Whenever the device is to be pulled out, a slight outward pulling force will be sufficient to overcome the pressure differential, move the lid away from the vessels and allow air to flow in.

### LIST OF DRAWINGS

Further features and advantages of the present invention will result more clearly from the illustrative, non-limiting description of a preferred, non-exclusive embodiment of a lock device for kitchen vessels as shown in the annexed drawings, in which:
- Figure 1 is a schematic top view of a lock device for kitchen vessels of the present invention;
- Figure 2 is a schematic sectional side view of the device of Figure 1 with kitchen vessels; and
- Figure 3 is a schematic sectional side view of the device of Figures 1 and 2, applied to kitchen vessels.

### DETAILED DESCRIPTION

Referring to the accompanying figures, numeral 1 designates a lock device for kitchen vessels 100, 101. In particular, the device 1 is of the type adapted to lock a first vessel 100 inside a second vessel 101.

The vessels 100 may be of any type known to the skilled person, by way of examples pots and/or pans. The first vessel 100 has such a shape and size as to be entirely held within the second vessel 101.

Thus, each vessel 100, 101 has a side wall 100a, 101a, and a bottom 100b, 101b. Optionally, the inner surface of each vessel 100, 101 may have a non-stick coating. Optionally, each vessel may be equipped with handles (not shown) applied to the exterior of the side wall 100a, 101a.

Reference will be made herein to containers 100, 101 having a cylindrical shape since this is by far the most common type. Nevertheless, with the operating principle of the device 1, two containers having arbitrary shapes may be locked. The device 1 may be thus adapted to rectangular containers, such as baking pans. Also, the side wall 100a, 101a need not be orthogonal to the bottom 100b, 101b, and a tapering or prismatic shape is also acceptable with the side wall 100a, 101a converging toward the bottom 100b, 101b. The vessels 100, 101 will not be further described, as they are known to the skilled person.

Turning again to the lock device 1 of the present invention, it shall be noted that it comprises a lid 2. This lid 2 is adapted to close the vessels 100, 101, i.e. may be placed in a closed configuration both on the first vessel 100 and on the second vessel 101.

In greater detail, the lid 2 has a center axis "A". Furthermore, the lid 2 has at least an inner edge 3 with a diameter substantially corresponding to an inside diameter of the first vessel 100. The lid 2 also has an outer edge 4 with a diameter substantially corresponding to an outside diameter of the second vessel 101.

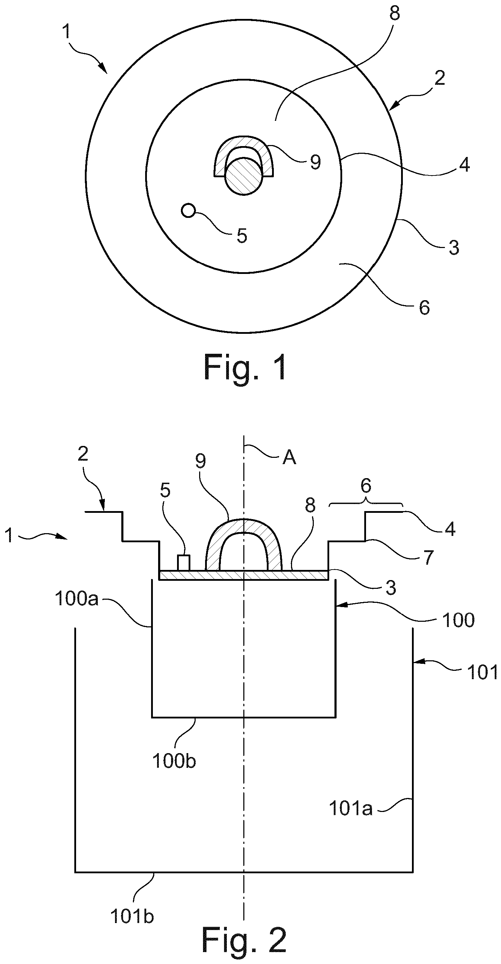

Advantageously, as shown for example in Figure 2, the outer edge 4 is placed at a higher level than the inner edge 3, in particular along the center axis "A". In other words, when the bottom 101a, 101b of the vessels 100, 101 is at a low level and the lid 2 is placed in the closed configuration, the outer edge 3 is higher than the inner edge 3. This allows the lid 2 to be used both to close the first vessel 100, by placing the inner edge 3 at the side wall 100a, and to close the second vessel 101, by placing the outer edge 4 at the side wall 101a.

As mentioned above, the vessels 100, 101 may also have a non-circular shape. Here, the term "diameter" must necessarily be interpreted as one or more characteristic dimensions, for example a side in the case of a square vessel or a width and a length in the case of a rectangular vessel.

In greater detail, the device 1 is equipped with a check valve 5. This valve 5 is placed on the lid 2 and is adapted to allow an outflow of air from the interior of the vessels 100, 101. The valve 5 is of well known type in the field of kitchen utensils, and will therefore not be further described.

According to the present invention, the device 1 comprises a sealing ring 6. This sealing ring 6 is made of an elastically deformable material, e.g. silicone rubber and/or silicone. In particular, the sealing ring 6 is placed at least on the outer edge 4 of the lid 2, to allow the lid 2, to fit into the second vessel 101 and ensure airtightness with the side wall 101a of the second vessel 101.

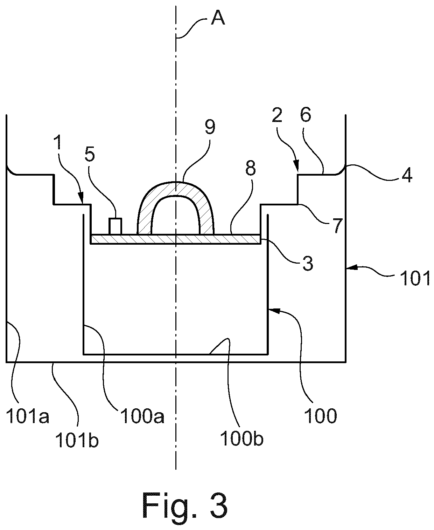

It shall be noted that the edges 3, 4 of the lid 2 are preferably formed at the sealing ring 6. As shown for example in Figure 3, the elastic bending of the sealing ring 6 pushes the outer edge 4 against the side wall 101a of the second vessel 101. Advantageously, this can provide a sealing effect between the lid 2 and the second container 101. Since air is exhausted from the valve 5, a partial vacuum is created between the second vessel 101 and the lid 2. Thus, the pressure difference firmly locks the lid 2 against the first vessel 100 and, as a result, the first vessel 100 is locked between the lid 2 and the second vessel 101.

Optionally, an intermediate edge 7 may be defined on the sealing ring 6, namely between the inner edge 3 and the outer edge 4. It should be noted that the intermediate edge 7 lies between the inner edge 3 and the outer edge 4 both in a radial direction and along the center axis A. By this arrangement, the sealing ring will have a "stepped" shape, as shown in the sectional view of Figure 2. Advantageously, the presence of the intermediate edge 7 allows the lock device 1 to be used with a third vessel (not shown) that is smaller than the second vessel 101 and larger than the first vessel 100.

The device 1 comprises a rigid portion 8, coupled to the sealing ring 6. This rigid portion 8 lies along the center axis A and is surrounded by the sealing ring 6. Advantageously, the rigid portion 8 is shaped like a normal lid so that it can be used when cooking food in the vessels 100, 101.

More in detail, the rigid portion 8 may be made of glass, metal or any other suitable material. The aforementioned check valve 5 is namely located on the rigid portion 8.

The device 1 further comprises a handle 9, which is oriented along the center axis A, in particular on the lid 2 and more particularly on the rigid portion 8. Advantageously, the handle 9 is configured to be pulled by a user, to thereby allow the lid 2 to be removed from the interior of the second vessel 101.

## Claims

1. A lock device (1) for kitchen vessels (100, 101) of the type adapted to lock a first vessel (100) inside a second vessel (101), **characterised in that** said device comprises:
- a lid (2) having a center axis (A), and at least one inner rim (3) with a diameter substantially corresponding to an inside diameter of the first vessel (100) and an outer rim (4) with a diameter substantially corresponding to an outside diameter of the second vessel (101);
- a non-return valve (5) on said lid (2), for air exhaust from the interior of said vessels (100, 101);
wherein said device comprises a sealing ring (6) made of an elastically deformable material and located at least on the outer rim (4) of the lid (2) for said lid (2) to be fitted into the second vessel (101) and impart airtightness between said sealing ring (6) and an inner wall (101a) of said second vessel (101).

2. Lock device (1) as claimed in the preceding claim, **characterized in that** said outer rim (4) is placed at a greater height than the inner rim.

3. Lock device (1) as claimed in any of the preceding claims, **characterized in that** at least one intermediate rim (7) is defined on said sealing ring (6) between the inner rim (3) and the outer rim (4).

4. Lock device (1) as claimed in any of the preceding claims, **characterized in that** said sealing ring (6) is a made of silicone rubber.

5. Lock device (1) as claimed in any of the preceding claims, **characterized in that** it comprises a rigid portion (8) extending along said center axis (A) and surrounded by said sealing ring (6).

6. Lock device (1) as claimed in the preceding claim, **characterized in that** said non-return valve (5) is placed on said rigid portion (8).

7. Lock device (1) as claimed in any of the preceding claims, **characterized in that** it comprises a handle (9) placed along said center axis (A), particularly on said rigid portion (8) and configured to be pulled by a user to remove said lid (2) from within said second vessel (101).

8. A kit comprising a lock device (1) as claimed in any of the preceding claims; first (100) and a second (101) vessels, said first vessel (100) being adapted to fit into said second vessel (101).

9. Kit as claimed in the preceding claim wherein said vessels (100, 101) are suitable for food cooking, and are particularly non-stick pots and/or pans.

## Patentansprüche

1. Verriegelungsvorrichtung (1) für Küchentöpfe (100, 101) des Typs, der zum Verriegeln eines ersten Topfes (100) im Inneren eines zweiten Topfes (101) geeignet ist, **dadurch gekennzeichnet, dass** die Vorrichtung umfasst:
- einen Deckel (2) mit einer Mittelachse (A) und mindestens einem inneren Rand (3) mit einem Durchmesser, der im Wesentlichen einem Innendurchmesser des ersten Topfes (100) entspricht, und einem äußeren Rand (4) mit einem Durchmesser, der im Wesentlichen einem Außendurchmesser des zweiten Topfes (101) entspricht;
- ein Rückschlagventil (5) auf dem Deckel (2) zum Ablassen von Luft aus dem Inneren der Töpfe (100, 101);
wobei die Vorrichtung einen Dichtungsring (6) umfasst, der aus einem elastisch verformbaren Material besteht und mindestens am äußeren Rand (4) des Deckels (2) angeordnet ist, damit der Deckel (2) in den zweiten Topf (101) eingepasst werden kann und zwischen dem Dichtungsring (6) und einer Innenwand (101a) des zweiten Topfes (101) eine Luftdichtheit vermittelt.

2. Verriegelungsvorrichtung (1) nach dem vorstehenden Anspruch, **dadurch gekennzeichnet, dass** der äußere Rand (4) in einer größeren Höhe als der innere Rand angeordnet ist.

3. Verriegelungsvorrichtung (1) nach einem der vorstehenden Ansprüche, **dadurch gekennzeichnet, dass** an dem Dichtungsring (6) zwischen dem inneren Rand (3) und dem äußeren Rand (4) mindestens ein Zwischenrand (7) ausgebildet ist.

4. Verriegelungsvorrichtung (1) nach einem der vorstehenden Ansprüche, **dadurch gekennzeichnet, dass** der Dichtungsring (6) aus Silikonkautschuk hergestellt ist.

5. Verriegelungsvorrichtung (1) nach einem der vorstehenden Ansprüche, **dadurch gekennzeichnet, dass** sie einen starren Abschnitt (8) umfasst, der sich entlang der Mittelachse (A) erstreckt und von dem Dichtungsring (6) umgeben ist.

6. Verriegelungsvorrichtung (1) nach dem vorstehenden Anspruch, **dadurch gekennzeichnet, dass** das Rückschlagventil (5) auf dem starren Abschnitt (8) angeordnet ist.

7. Verriegelungsvorrichtung (1) nach einem der vorstehenden Ansprüche, **dadurch gekennzeichnet, dass** sie einen Griff (9) umfasst, der entlang der Mittelachse (A), insbesondere an dem starren Abschnitt (8) angeordnet ist und so konfiguriert ist, dass er von einem Benutzer gezogen werden kann, um den Deckel (2) aus dem Inneren des zweiten Topfes (101) zu entfernen.

8. Bausatz umfassend eine Verriegelungsvorrichtung (1) nach einem der vorstehenden Ansprüche; einen ersten (100) und einen zweiten (101) Topf, wobei der erste Topf (100) in den zweiten Topf (101) passt.

9. Bausatz nach dem vorstehenden Anspruch, wobei die Töpfe (100, 101) zum Garen von Lebensmitteln geeignet sind und insbesondere antihaftbeschichtete Töpfe und/oder Pfannen sind.

## Revendications

1. Dispositif de verrouillage (1) pour récipients de cuisine (100, 101) du type conçu pour verrouiller un premier récipient (100) à l'intérieur d'un second récipient (101), **caractérisé en ce que** ledit dispositif comprend :
- un couvercle (2) ayant un axe central (A), et au moins un rebord interne (3) ayant un diamètre correspondant sensiblement à un diamètre intérieur du premier récipient (100) et un rebord externe (4) ayant un diamètre correspondant sensiblement à un diamètre extérieur du second récipient (101) ;
- un clapet anti-retour (5) sur ledit couvercle (2), pour une évacuation d'air depuis l'intérieur desdits récipients (100, 101) ;
dans lequel ledit dispositif comprend un joint d'étanchéité annulaire (6) constitué d'un matériau élastiquement déformable et situé au moins sur le rebord externe (4) du couvercle (2) pour que ledit couvercle (2) soit ajusté dans le second récipient (101) et confère une étanchéité à l'air entre ledit joint d'étanchéité annulaire (6) et une paroi interne (101a) dudit second récipient (101).

2. Dispositif de verrouillage (1) selon la revendication précédente, **caractérisé en ce que** ledit rebord externe (4) est placé à une hauteur supérieure à celle du rebord interne.

3. Dispositif de verrouillage (1) selon l'une quelconque des revendications précédentes, **caractérisé en ce qu'**au moins un rebord intermédiaire (7) est défini sur ledit joint d'étanchéité annulaire (6) entre le rebord interne (3) et le rebord externe (4).

4. Dispositif de verrouillage (1) selon l'une quelconque des revendications précédentes, **caractérisé en ce que** ledit joint d'étanchéité annulaire (6) est constitué de caoutchouc de silicone.

5. Dispositif de verrouillage (1) selon l'une quelconque des revendications précédentes, **caractérisé en ce qu'**il comprend une partie rigide (8) s'étendant le long dudit axe central (A) et encerclée par ledit joint d'étanchéité annulaire (6).

6. Dispositif de verrouillage (1) selon la revendication précédente, **caractérisé en ce que** ledit clapet anti-retour (5) est placé sur ladite partie rigide (8).

7. Dispositif de verrouillage (1) selon l'une quelconque des revendications précédentes, **caractérisé en ce qu'**il comprend une poignée (9) placée le long dudit axe central (A), en particulier sur ladite partie rigide (8) et configurée pour être tirée par un utilisateur pour retirer ledit couvercle (2) de l'intérieur dudit second récipient (101).

8. Kit comprenant un dispositif de verrouillage (1) selon l'une quelconque des revendications précédentes ; un premier (100) et un second (101) récipient, ledit premier récipient (100) étant conçu pour s'ajuster dans ledit second récipient (101).

9. Kit selon la revendication précédente dans lequel lesdits récipients (100, 101) sont appropriés pour la cuisson d'aliments, et sont en particulier des casseroles et/ou des poêles antiadhésives.
